# EUROPÄISCHE PATENTANMELDUNG

(11) **EP 1 092 962 A2**
(43) Veröffentlichungstag der Anmeldung: **18.04.2001**
(21) Anmeldenummer: 00120286.0
(22) Anmeldetag: 28.09.2000
(51) Int. Cl.: G01F 1/684

(54) **Offset-Reduktion an Massenflusssensor**

(30) Priorität: 30.09.1999 CH 180599
(71) Anmelder: Sensirion AG, 8052 Zürich (CH)
(72) Erfinder: Mayer, Felix, 8057 Zürich (CH); Lechner, Moritz, 8057 Zürich (CH)
(74) Vertreter: Blum, Rudolf Emil Ernst

(57) **Zusammenfassung**

Es wird ein Verfahren und ein Sensor zur verbesserten Massenflussmessung offenbart. In herkömmlichen thermischen Massenflusssensoren werden Wärmesenken relativ zu Heizdraht (4) und Temperatursensoren (50, 60) unpräzise positioniert, nämlich durch Mikrostrukturierung von beiden Chipseiten (1a, 1b) oder durch schlecht kontrollierbares Unterätzen des Chips (1) von oben (1a). Die thermische Asymmetrie bewirkt, dass ein massenstromabhängiges Temperaturdifferenzsignal der Sensoren (50, 60) offsetbehaftet ist. Erfindungsgemäss werden durch Mikrostrukturierung sowohl der Heizdraht (4) und die Thermoelemente (5, 6) als auch Gebiete (9, 10, 13, 14) mit in der Membran oder Brücke (3) erhöhter Wärmeleitfähigkeit von der Chipoberseite (1a) her, z. B. durch Aluminiumbeschichtung (11), exakt definiert. Alternativ kann durch n-Dotierung von oben (1a) eine Ätzbarriere (13, 14) geschaffen und anschliessend von unten (1b) die Membran oder Brücke (3) freigeätzt werden. Durch das Verfahren werden die Wärmeleitfähigkeitsgebiete (9, 10, 13, 14) zu den Temperatursensoren (50, 60) mit sub-µm Präzision gleich beabstandet und der Offset im Temperaturdifferenzsignal um 1-2 Grössenordnungen reduziert.

## Beschreibung

### TECHNISCHES GEBIET

Die Erfindung betrifft ein Herstellungsverfahren für Massenflusssensoren und einen Massenflusssensor nach dem Oberbegriff der unabhängigen Ansprüche.

### STAND DER TECHNIK

Derartige Sensoren werden in dem Artikel von F. Mayer et al., "Scaling of Thermal CMOS Gas Flow Microsensors: Experiment and Simulation", Proc. IEEE Micro Electro Mechanical Systems, S. 116ff (IEEE, 1996), oder in F. Mayer et al., "Single-Chip CMOS Anemometer", Proc. IEEE International Electron Devices Meeting, S. 895ff (IEDM, 1997) beschrieben. Sie werden verwendet, um den Massenfluss von Medien wie Gasen, Flüssigkeiten oder allgemein Fluiden zu bestimmen. Sie besitzen ein Heizelement, symmetrisch dazu zwei Temperatursensoren und weiter aussen liegende Wärmesenken. Die Temperaturdifferenz zwischen den beiden Temperatursensoren ist ein Mass für den Massenfluss. Eine asymmetrische Anordnung der Wärmesenken relativ zu den Temperatursensoren verursacht einen in der Regel temperaturabhängigen Offset im Temperaturdifferenzsignal. Dadurch wird die Genauigkeit der Massenflussmessung eingeschränkt.

Das Heizelement und die Temperatursensoren sind auf einer Membran oder Brücke angeordnet, die durch Ausätzen des Chips von unten oder durch Unterätzen des Chips von oben hergestellt werden und ein Gebiet mit niedriger Wärmeleitfähigkeit im Chip bilden. Der Chip, der die Membran oder Brücke berandet, wirkt als Wärmesenke. Bei rückseitig ausgeätzten Massenflusssensoren werden die Positionen der Temperatursensoren von der Chipoberseite und die Positionen der Wärmesenken von der Chipunterseite her definiert. Mit herkömmlichen Justiereinrichtungen ergibt sich eine maximale Justiergenauigkeit von ca. 2-3 µm für die Abstände Wärmesenke-Temperatursensor. Die Grösse des Offsetsignals ist dadurch fix vorgegeben. Es beträgt typischerweise einige % des Temperaturdifferenzsignals bei mittlerem Massenfluss. Bei vorderseitig unterätzten Massenflusssensoren ist die Position oder Berandung der Wärmesenke ebenfalls nicht direkt von oben kontrollierbar. Zudem hängt die Genauigkeit der Unterätzung von der anisotropen Ätzbarkeit der Kristallstruktur und von der nicht perfekten Alignierbarkeit der photolithographisch mikrostrukturierten Elemente (Heizelement, Temperatursensoren) relativ zur Kristallstruktur ab.

Bei heutigen CMOS-Herstellungsverfahren für derartige Massenflusssensoren tritt also in jedem Fall eine thermische Asymmetrie auf, die ein störendes Offsetsignal verursacht. Bisher wird das Offsetsignal und gegebenenfalls sein Temperaturgang elektronisch korrigiert.

### DARSTELLUNG DER ERFINDUNG

Die Erfindung stellt sich die Aufgabe, ein Herstellungsverfahren für Massenflusssensoren und einen Massenflusssensor mit einem reduzierten Offsetsignal anzugeben. Diese Aufgabe wird erfindungsgemäss durch die Merkmale der unabhängigen Ansprüche gelöst.

Erfindungsgemäss werden bei einem Massenflusssensor der genannten Art symmetrische Positionen der Temperatursensoren relativ zum Heizdraht und zugleich zu Wärmesenken dadurch realisiert, dass durch Mikrostrukturierung sowohl der Heizdraht und die Temperatursensoren als auch Gebiete mit gegenüber der Membran oder Brücke erhöhter Wärmeleitfähigkeit von der Chipoberseite her definiert werden und die Wärmeleitfähigkeitsgebiete in gleichen Abständen zu bezüglich des Heizelements symmetrisch angeordneten Temperatursensoren positioniert werden. Die Mikrostrukturierung umfasst z. B. Photolithographie, Ätzen, Dünnfilmdeposition durch Sputtern oder Aufdampfen, Dotierung durch Implantation oder Eindiffusion, o. ä.. Von der Chipoberseite her können die Abstände zwischen Heizdraht, Temperatursensoren und Wärmesenken ohne Aufwand mit sub-µm Genauigkeit, d. h. besser als ±0,5 µm, definiert werden. Komplizierte Justierungen zwischen Chipoberseite und Chipunterseite werden vermieden. Insgesamt können der Offset um ca. 1-2 Grössenordnungen verkleinert, die Signalverstärkung des Temperaturdifferenzsignals heraufgesetzt und die Messempfindlichkeit entsprechend verbessert werden. Eine elektronische Offsetkorrektur kann vermieden oder aber mit verbesserter Genauigkeit realisiert werden.

In einem bevorzugten Ausführungsbeispiel werden die Wärmeleitfähigkeitsgebiete durch Aufsputtern von Aluminiumschichten auf der Oberseite der Membran oder Brücke gebildet. Der Rand der Metallschicht definiert den Ort, wo die Wärmeleitfähigkeit der Membran oder Brücke auf einen hohen Wert springt und der Chip als Wärmesenke wirkt.

In einem anderen Ausführungsbeispiel sind die Temperatursensoren Thermoelemente mit Bahnen aus Aluminium und Poly-Silizium, wobei die Aluminiumbahnen auf der vom Heizelement abgewandten Seite zu Wärmeleitfähigkeitgebieten oder Wärmesenken verbreitert sind.

In einem weiteren Ausführungsbeispiel werden die Wärmeleitfähigkeitsgebiete durch n-Dotierung von der Chipoberseite her definiert und durch Ätzen von der Chipunterseite hergestellt, wobei das n-dotierte, positiv geladene Gebiet als Ätzbarriere wirkt.

Weitere Ausführungen, Vorteile und Anwendungen der Erfindung ergeben sich aus den abhängigen Ansprüchen sowie aus der nun folgenden Beschreibung anhand der Figuren.

### KURZE BESCHREIBUNG DER ZEICHNUNG

- Fig. 1: zeigt einen Massenflusssensor gemäss Stand der Technik (perspektivische Ansicht);
- Fig. 2: zeigt einen Massenflusssensor mit Wärmesenken, die durch erfindungsgemässe Metallbeschichtungen definiert sind (Draufsicht);
- Fig. 3: zeigt einen Massenflusssensor mit Wärmesenken, die durch erfindungsgemässe n-Dotierungen definiert sind (Querschnitt).

In den Figuren sind gleiche Teile mit gleichen Bezugszeichen versehen.

### WEGE ZUR AUSFÜHRUNG DER ERFINDUNG

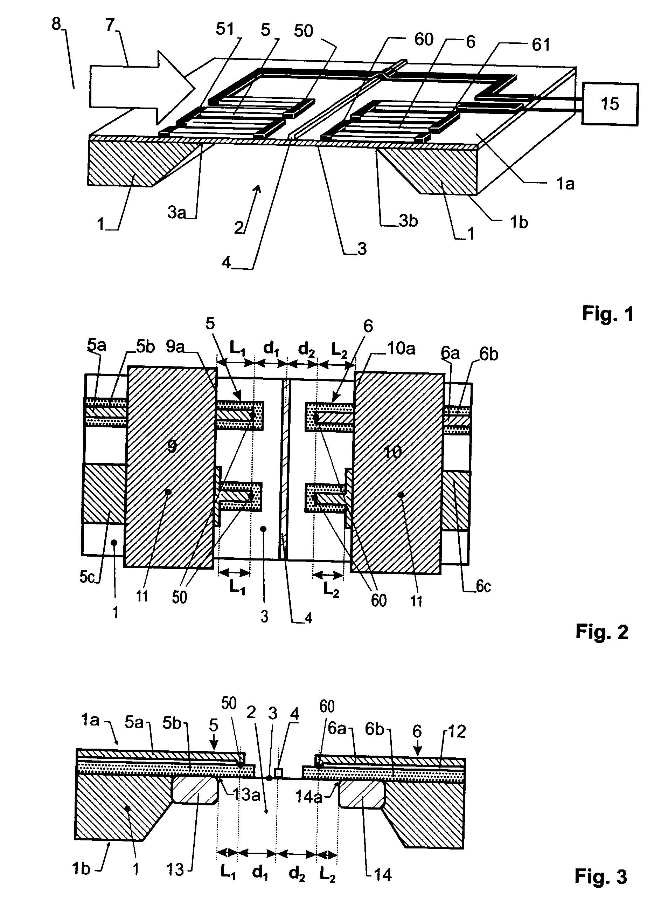

In einer bevorzugten Ausführung des erfindungsgemässen Massenflusssensors wird ein Sensor-Bauelement verwendet, wie es in Fig. 1 dargestellt ist. Dieses Bauelement ist ausführlich in F. Mayer et al., "Scaling of Thermal CMOS Gas Flow Microsensors: Experiment and Simulation", Proc. IEEE Micro Electro Mechanical Systems, S. 116ff (IEEE, 1996) beschrieben. Es ist auf einem Silizium-Einkristall 1 angeordnet, in welchem eine Öffnung oder Vertiefung 2 ausgeätzt wurde. Die Öffnung bzw. Vertiefung 2 wird von einer dünnen Membran 3 aus einem Dielektrikum überspannt. Auf der Membran 3 ist ein Widerstands-Heizelement 4 angeordnet. Symmetrisch zum Heizelement 4 sind zwei Thermoelemente 5, 6 vorgesehen, deren erste Kontaktstellen 50, 60 als Temperatursensoren 50, 60 dienen. Die zweiten Kontaktstellen 51, 61 dienen als Referenztemperatursensoren. Die Thermoelemente 5, 6 und das Heizelement 4 liegen so zur Flussrichtung 7, dass das zu messende Medium 8 zuerst das erste Thermoelement 5, dann das Heizelement 4 und schliesslich das zweite Thermoelement 6 überstreicht. Wie im oben erwähnten Dokument beschrieben, kann mit einer Vorrichtung gemäss Fig. 1 der Massenfluss des zu messenden Mediums 8 ermittelt werden. Jedes Thermoelement 5, 6 misst die relative Temperatur zwischen den Kontaktstellen 50, 51 und 60, 61. Die Differenz oder der Quotient der relativen Temperaturen hängt sowohl von der Flussgeschwindigkeit als auch von der Dichte bzw. dem Druck im Medium 8 ab. Mittels geeigneter Eichtabellen kann aus der Temperaturdifferenz oder dem Temperaturquotienten sodann der Massenfluss berechnet werden. Die Signalverarbeitung erfolgt mit Hilfe geeigneter Messmittel 15.

Bei herkömmlichen Massenflusssensoren werden die Thermoelemente 5, 6, insbesondere die Positionen der Temperatursensoren 50, 60 oder ersten Kontaktstellen 50, 60, von der Chipoberseite 1a her durch Mikrostrukturierung festgelegt, die Ränder 3a, 3b der Membran 3 hingegen durch die Ausätzung von der Chipunterseite 1b. Die Membran 3 stellt ein Gebiet mit extrem niedriger Wärmeleitfähigkeit im Chip 1 dar. An den Rändern 3a, 3b nimmt die Wärmeleitfähigkeit im Chip 1 mehr oder weniger sprunghaft zu. Die vom Heizdraht 4 erzeugte und durch den Massenstrom deformierte Temperaturverteilung wird folglich im Bereich der Membran 3 durch die Wärmeleitfähigkeit im Fluid 8 dominiert und ausserhalb der Membran 3 durch die Wärmeleitfähigkeit im Chip 1. Symmetrische Abstände zwischen den ersten Kontaktstellen 50, 60 und den zugehörigen Rändern 3a, 3b der Membran 3 sind bestenfalls mit einer Genauigkeit von einigen µm kontrolliert einhaltbar.

Gemäss Fig. 2 und 3 wird das Herstellungsverfahren erfindungsgemäss modifiziert, indem mindestens zwei Wärmeleitfähigkeitsgebiete 9, 10, 13, 14 von der Chipoberseite 1a her mikrostrukturiert und mit hoher Präzision in gleichen Abständen zu bezüglich des Heizelements 4 symmetrisch angeordneten Temperatursensoren 50, 60 positioniert werden. Es wird also jedem Temperatursensor 50, 60 ein Wärmeleitfähigkeitsgebiet 9, 10, 13, 14 zugeordnet, wobei für die symmetrisch angeordneten Temperatursensoren 50, 60, deren Differenz- oder Quotientensignale zur Massenflussmessung ausgewertet werden, die zugeordneten Wärmeleitfähigkeitsgebiete 9, 10, 13, 14 mit einer Genauigkeit von mindestens ±0,5 µm gleich beabstandet sind. Natürlich können auch mehrere Temperatursensoren 50, 60 einem Wärmeleitfähigkeitsgebiet 9, 10, 13, 14 zugeordnet sein. Die Wärmeleitfähigkeitsgebiete 9, 10, 13, 14 können getrennte Wärmesenken darstellen oder mit einer gemeinsamen Wärmesenke 1 verbunden sein. Auf diese Weise kann ein Offset im Messsignal, gegeben als Differenz oder Quotient der Signale symmetrischer Temperatursensoren 50, 60 oder Thermoelemente 5, 6, exakt vorgegeben und insbesondere minimiert werden. Im folgenden werden einige Ausführungsbeispiele angegeben.

Beispielsweise wird mindestens ein Paar von Temperatursensoren 50, 60 und diesen zugeordneten Wärmeleitfähigkeitsgebieten 9, 10, 13, 14 symmetrisch zum Heizelement 4 angeordnet und werden für jedes Paar gleiche Abstände zwischen den Temperatursensoren 50, 60 und den zugeordneten Wärmeleitfähigkeitsgebieten 9, 10 mit einer Genauigkeit von ±0,2 µm, bevorzugt ±0,05 µm, besonders bevorzugt ±0,02 µm, eingehalten. Dadurch lässt sich der Offset relativ zum Messsignal von mehreren Prozent auf wenige 10⁻³, bevorzugt wenige 10⁻⁴, besonders bevorzugt kleiner als 10⁻⁴, reduzieren.

Vorzugsweise reichen die Wärmeleitfähigkeitsgebiete 9, 10, 13, 14 bis an den Rand 3a, 3b der Membran oder Brücke 3 oder sie überlappen diesen Rand 3a, 3b mehr oder weniger stark. Auf diese Weise wird eine zu den Temperatursensoren 50, 60 exakt beabstandbare Wärmebrücke zwischen der Membran oder Brücke 3 und dem als Wärmesenke wirksamen Chip 1 definiert.

Gemäss Fig. 2 können die Wärmeleitfähigkeitsgebiete 9, 10 durch metallische Schichten 11 gebildet werden, die auf der Oberseite 1a des Chips 1 aufgebracht werden. Bevorzugt wird eine Aluminiumschicht 11 aufgesputtert oder aufgedampft und gegebenenfalls durch eine (nicht dargestellte) Passivierungsschicht abgedeckt. Durch die Metallbeschichtung 11 sind die Gebiete 9, 10 mit erhöhter Wärmeleitfähigkeit in der Membran oder Brücke 3 von der Chipoberseite 1a her kontrolliert mikrostrukturierbar und insbesondere mit sub-µm Präzision positionierbar.

Alternativ oder ergänzend können Wärmeleitfähigkeitsgebiete 9, 10 auch dadurch definiert werden, dass wärmeleitfähige Bahnen 5a, 6a der Thermoelemente 5, 6 eine Verbreiterung 5c, 6c aufweisen und dadurch als Wärmesenke wirken oder Wärme zu einer angeschlossenen Wärmesenke 1 abführen. In Fig. 2 ist eine Mischform dieser Lösung mit der zuvor beschriebenen Metallbeschichtung 11 dargestellt. Vorzugsweise bestehen die Kontaktstellen 50, 51, 60, 61 aus Aluminium 5a und Poly-Silizium 5b und die wärmeleitfähigen Bahnen 5a, 6a und die Verbreiterungen 5c, 6c aus Aluminium. Eine Zwischenschicht oder Isolationsschicht zwischen dem Aluminium 5a und Poly-Silizium 5b ist in Fig. 3 mit 12 bezeichnet.

Die Verwendung von Ätzbarrieren zur Mikrostrukturierung von Chips 1 ist aus dem Artikel von T. Müller et al., "Industrial fabrication method tor arbitrarily shaped silicon n-well micromechanical structures", Proc. IEEE, Workshop on Micro Electro Mechanical Systems, S. 240-245 (IEEE, 1998) bekannt. Die Gestalt einer Mikrostruktur wird durch n-Dotierung eines Gebiets definiert und dann die Mikrostruktur durch anisotropes Ätzen in Silizium hergestellt. Während des Ätzprozesses wirkt die mit positiver Spannung versorgte n-Dotierung als elektrochemische Ätzbarriere, so dass umliegendes Material entfernt werden kann.

Fig. 3 zeigt ein erfindungsgemässes Verfahren, bei dem Ätzbarrieren auf neue Weise zur Definition von Rändern 13a, 14a der Membran oder Brücke 3 eingesetzt werden. Die Wärmeleitfähigkeitsgebiete 13, 14 werden definiert, indem von der Oberseite 1a des Chips 1 her Gebiete 13, 14 n-dotiert werden, diese Gebiete 13, 14 auf positives Potential gelegt werden und von der Unterseite 1b des Chips 1 die Öffnung oder Vertiefung 2 zwischen den Gebieten 13, 14 ausgeätzt wird. Da die n-Dotierungen 13, 14 als Ätzbarrieren wirken, können die gemeinsamen Ränder 13a, 14a der Gebiete 13, 14 und der Membran oder Brücke 3 von der Chipoberseite 1a her räumlich fixiert und mit deutlich verbesserter Genauigkeit relativ zu den Temperatursensoren 50, 60 angeordnet, insbesondere zu den Temperatursensoren 50, 60 gleich beabstandet, werden.

Der Chip 1 besteht aus Silizium, alternativ aus Galliumarsenid oder Glas. Insbesondere wird die Mikrostrukturierung zur Definition der Wärmeleitfähigkeitsgebiete 9, 10, 13, 14 als Verfahrensschritt oder als Nachbearbeitungsschritt in einem industriellen, zur Massenherstellung geeigneten CMOS-Chipproduktionsprozess durchgeführt.

Die Erfindung hat auch einen Massenflusssensor zum Gegenstand, der gemäss dem oben beschriebenen Verfahren herstellbar ist. Insbesondere sind genau zwei Wärmeleitfähigkeitsgebiete 9, 10, 13, 14 relativ zu genau zwei Temperatursensoren 50, 60 mit sub-µm Präzision gleich beabstandet. In den Ausführungsbeispielen nach Fig. 2 und 3 ist das Heizelement 4 langgestreckt, weist ein erster Temperatursensor 50 zu einem ersten Rand 9a, 13a eines ersten Wärmeleitfähigkeitsgebiets 9, 13 einen ersten Abstand L₁ auf und weist ein zweiter Temperatursensor 60 zu einem zweiten Rand 10a, 14a eines zweiten Wärmeleitfähigkeitsgebiets 10 einen zweiten Abstand L₂ auf. Der erste und zweite Abstand L₁, L₂ stimmen bis auf eine Toleranz von ±0,2 µm, bevorzugt ±0.1 µm, besonders bevorzugt ±0.05 µm, überein. Beispielsweise sind die Temperatursensoren 50, 60 erste Kontaktstellen 50, 60 von Thermoelementen 5, 6 und sind die zweiten Kontaktstellen 51, 61 der Thermoelemente 5, 6 innerhalb der den Temperatursensoren 50, 60 zugeordneten Wärmeleitfähigkeitsgebieten 9, 10, 13, 14 angeordnet. Insbesondere umfassen die Thermoelemente 5, 6 abwechselnd erste Kontaktstellen 50, 60 und zweite Kontaktstellen 51, 61, die mäanderförmig in Serie angeordnet sind.

Der Massenfluss wird aus der Differenz oder dem Quotienten der Temperatursignale paarweiser, d. h. bezüglich des Heizelements 4 symmetrisch angeordneter Temperatursensoren 50, 60 oder Thermoelemente 5, 6 ermittelt. Ein verbleibendes Offsetsignal und gegebenenfalls ein Temperaturgang des Offsetsignals können elektronisch korrigiert werden. Insgesamt wird durch die Erfindung ein einfaches Verfahren zur Reduktion des Offsetsignals eines Massenflusssensors angegeben.

## Patentansprüche

1. Verfahren zur Herstellung eines Massenflusssensors auf einem Chip (1), wobei eine Öffnung oder Vertiefung (2) in den Chip (1) geätzt wird, auf einer Oberseite (1a) des Chips (1) eine dünne Membran oder Brücke (3) aus einem Dielektrikum über der Öffnung oder Vertiefung (2) belassen wird und auf der Membran oder Brücke (3) ein Heizelement (4) und symmetrisch dazu mindestens zwei Temperatursensoren (50, 60) durch Mikrostrukturierung von der Chipoberseite (1a) her angeordnet werden, dadurch gekennzeichnet, dass
a) mindestens zwei Wärmeleitfähigkeitsgebiete (9, 10, 13, 14) mit gegenüber der Membran oder Brücke (3) erhöhter Wärmeleitfähigkeit durch Mikrostrukturierung von der Chipoberseite (1a) definiert werden und
b) die Wärmeleitfähigkeitsgebiete (9, 10, 13, 14) in gleichen Abständen zu bezüglich des Heizelements (4) symmetrisch angeordneten Temperatursensoren (50, 60) positioniert werden.

2. Verfahren zur Herstellung eines Massenflusssensors nach Anspruch 1, dadurch gekennzeichnet, dass
a) die Wärmeleitfähigkeitsgebiete (9, 10, 13, 14) bis an einen Rand (3a, 3b) der Membran oder Brücke (3) heranreichen oder den Rand (3a, 3b) der Membran oder Brücke (3) überlappen und/oder
b) symmetrisch zum Heizelement (4) mindestens ein Paar von Temperatursensoren (50, 60) und diesen zugeordneten Wärmeleitfähigkeitsgebieten (9, 10, 13, 14) angeordnet wird und für jedes Paar die Wärmeleitfähigkeitsgebiete (9, 10, 13, 14) zu den Temperatursensoren (50, 60) mit einer Genauigkeit von ±0,2 µm, bevorzugt ±0,05 µm, besonders bevorzugt, gleich beabstandet werden.

3. Verfahren zur Herstellung eines Massenflusssensors nach einem der Ansprüche 1-2, dadurch gekennzeichnet, dass
a) die Wärmeleitfähigkeitsgebiete (9, 10) durch metallische Schichten (11) gebildet werden, die auf der Oberseite (1a) des Chips (1) aufgebracht werden,
b) insbesondere dass die metallischen Schichten (11) durch Aufsputtern oder Aufdampfen von Aluminium gebildet werden und
c) insbesondere dass die metallischen Schichten (11) durch eine Passivierungsschicht abgedeckt werden.

4. Verfahren zur Herstellung eines Massenflusssensors nach einem der Ansprüche 1-3, dadurch gekennzeichnet, dass
a) die Wärmeleitfähigkeitsgebiete (13, 14) dadurch definiert werden, dass von der Oberseite (1a) des Chips (1) her Gebiete (13, 14) n-dotiert werden und
b) die n-dotierten Gebiete (13, 14) auf positives Potential gelegt werden und von der Unterseite (1b) des Chips (1) die Öffnung oder Vertiefung (2) zwischen den Gebieten (13, 14) ausgeätzt wird.

5. Verfahren zur Herstellung eines Massenflusssensors nach einem der Ansprüche 1-4, dadurch gekennzeichnet, dass
a) der Chip (1) aus Silizium, Galliumarsenid oder Glas besteht und/oder
b) die Mikrostrukturierung zur Definition der Wärmeleitfähigkeitsgebiete (9, 10, 13, 14) als Verfahrensschritt in einem industriellen CMOS-Chipproduktionsprozess durchgeführt wird.

6. Massenflusssensor für ein Fluid (8), herstellbar gemäss einem Verfahren nach einem der vorangehenden Ansprüche.

7. Massenflusssensor für ein Fluid (8), mit zwei in einer Flussrichtung (7) nacheinander auf einer Brücke oder Membran (3) angeordneten Temperatursensoren (50, 60), einem dazwischen angeordneten Heizelement (4) und mit Messmitteln (15) zur Bestimmung des Massenflusses aus Temperatursignalen der Temperatursensoren (50, 60), dadurch gekennzeichnet, dass
a) zwei Wärmeleitfähigkeitsgebiete (9, 10) durch metallische Schichten (11) gebildet sind, die auf der Oberseite (1a) des Chips (1) angeordnet sind und/oder
b) zwei Wärmeleitfähigkeitsgebiete (13, 14) von der Oberseite (1a) des Chips (1) durch n-dotierte Gebiete (13, 14) definiert sind und zwischen den Gebieten (13, 14) von der Unterseite (1b) des Chips (1) eine Öffnung oder Vertiefung (2) unter der Brücke oder Membran (3) ausgeätzt ist
und dass die Wärmeleitfähigkeitsgebiete (9, 10, 13, 14) relativ zu den Temperatursensoren (50, 60) gleich beabstandet sind.

8. Massenflusssensor nach einem der Ansprüche 6-7, dadurch gekennzeichnet, dass
a) das Heizelement (4) langgestreckt ist,
b) ein erster Temperatursensor (50) zu einem ersten Rand (9a, 13a) eines ersten Wärmeleitfähigkeitsgebiets (9, 13) einen ersten Abstand (L₁) aufweist,
c) ein zweiter Temperatursensor (60) zu einem zweiten Rand (10a, 14a) eines zweiten Wärmeleitfähigkeitsgebiets (10, 14) einen zweiten Abstand (L₂) aufweist und
d) der erste und zweite Abstand (L₁, L₂) bis auf eine Toleranz von ±0,2 µm, bevorzugt ±0.1 µm, besonders bevorzugt ±0.05 µm, übereinstimmen.

9. Massenflusssensor nach einem der Ansprüche 6-8, dadurch gekennzeichnet, dass
a) die Temperatursensoren (50, 60) erste Kontaktstellen (50, 60) von Thermoelementen (5, 6) sind,
b) zweite Kontaktstellen (51, 61) der Thermoelemente (5, 6) innerhalb der den Temperatursensoren (50, 60) zugeordneten Wärmeleitfähigkeitsgebieten (9, 10, 13, 14) angeordnet sind und
c) insbesondere dass die Thermoelemente (5, 6) abwechselnd erste Kontaktstellen (50, 60) und zweite Kontaktstellen (51, 61) umfassen, die mäanderförmig in Serie angeordnet sind.

10. Massenflusssensor nach Anspruch 9, dadurch gekennzeichnet, dass
a) zur Definition von Wärmeleitfähigkeitsgebieten (9, 10) wärmeleitfähige Bahnen (5a, 6a) der Thermoelemente (5, 6) eine Verbreiterung (5c, 6c) aufweisen und
b) insbesondere dass die Kontaktstellen (50, 51, 60, 61) aus Aluminium (5a) und Poly-Silizium (5b) bestehen und die wärmeleitfähigen Bahnen (5a, 6a) und die Verbreiterungen (5c, 6c) aus Aluminium (5a) bestehen.

11. Massenflusssensor nach einem der Ansprüche 6-10, dadurch gekennzeichnet, dass
a) der Massenfluss aus der Differenz oder dem Quotienten der Temperatursignale symmetrisch angeordneter Temperatursensoren (50, 60) oder Thermoelemente (5, 6) ermittelt wird und/oder
b) ein verbleibendes Offsetsignal und gegebenenfalls ein Temperaturgang des Offsetsignals elektronisch korrigiert werden.
